# EUROPÄISCHE PATENTSCHRIFT

(11) **EP 1 514 823 B1**
(45) Veröffentlichungstag und Bekanntmachung des Hinweises auf die Patenterteilung: **21.05.2008**
(21) Anmeldenummer: 04020705.2
(22) Anmeldetag: 01.09.2004
(51) Int. Cl.: B65H 51/20, B65H 51/30, G02B 6/44

(54) **Kabelzuführeinrichtung für eine Kabelbearbeitungsmaschine**
Cable feeding apparatus for a cable processing machine
Dispositif d'alimentation de câbles pour une machine de traitement de câbles

(30) Priorität: 10.09.2003 EP 03405665
(43) Veröffentlichungstag der Anmeldung: 16.03.2005
(73) Patentinhaber: Komax Holding AG, 6036 Dierikon (CH)
(72) Erfinder: Ulrich, Kurt, Dipl. El. Ing. FH, 6370 Stans (CH)
(74) Vertreter: Gaussmann, Andreas

(56) Entgegenhaltungen:
- EP-A- 0 255 507
- DE-A- 2 036 157
- DE-A- 3 343 286
- DE-A- 4 443 503
- US-A- 4 500 043
- US-A- 5 413 264
- PATENT ABSTRACTS OF JAPAN Bd. 016, Nr. 445 (P-1422), 17. September 1992 (1992-09-17) & JP 04 156405 A (SUMITOMO ELECTRIC IND LTD), 28. Mai 1992 (1992-05-28)
- PATENT ABSTRACTS OF JAPAN Bd. 1998, Nr. 05, 30. April 1998 (1998-04-30) & JP 10 021764 A (JAPAN AUTOMAT MACH CO LTD), 23. Januar 1998 (1998-01-23)

## Beschreibung

Die Erfindung betrifft eine Einrichtung zur Zuführung von Kabeln zu einer Kabelbearbeitungsmaschine, wobei nach einem Kabelvorrat und vor der Kabelbearbeitungsmaschine ein Kabelspeicher vorgesehen ist, der mittels einer Transporteinheit speisbar ist und der Kabelspeicher den Kabelbedarf der Kabelbearbeitungsmaschine deckt.

Aus der Offenlegungsschrift DE 33 43 286 A1 ist eine Anordnung zum Aufspulen eines Lichtwellenleiters bekannt geworden. Der Aufwickelvorgang erfolgt bei einer konstanten mechanischen Zugspannung. Die Zugspannung wird bestimmt durch das Eigengewicht der durchhängenden Leiterlänge und durch ein daran angebrachtes, torusförmiges Zusatzgewicht. Die Länge des durchhängenden Leiters bzw. die Lage des Zusatzgewichtes ist regelbar mittels Regeleinrichtung und Detektoreinrichtung. Die Drehzahl der Aufwickelspule wird derart geregelt, dass die Länge des durchhängenden Leiters konstant bleibt, wobei übereinander angeordnete Lichtschranken die Lage des Zusatzgewichtes abtasten.

Aus der JP 04156405 ist ein Rollenspeicher mit Tänzerrollen bekannt geworden, der je nach Lage der Tänzerrolle einen Vorrat an Glasfaserkabel aufnehmen kann. Die Endlagen der Tänzerrolle ist mittels Detektoren überwachbar.

Aus der US 5 413 264 sind in Kaskade angeordnete Rollenspeicher für Faserware bekannt geworden. Zwischen den Speichern sind antreibbare Rollen vorgesehen, die die Faserware transportieren.

Aus der DE 44 43 503 ist eine Bearbeitungseinrichtung zur Herstellung von Schraubenfedern bekannt geworden. Zwischen einer Abwickeleinrichtung für Federdraht und der Bearbeitungseinrichtung bildet der Federdraht eine Schlaufe, deren Durchmesser konstant gehalten wird.

Aus der JP 10021764 ist eine Speichereinrichtung bekannt geworden, deren Speicherinhalt durch eine Schlaufe gebildet wird. Mit dem wandernden Kabelscheitel wird ein Läufer mitbewegt, dessen untere Endlage detektiert wird.

Ein Nachteil der bekannten Einrichtungen liegt darin, dass zur Vermeidung von Regelschwingungen regeltechnisch wie auch mechanisch aufwendige Massnahmen notwendig sind.

Hier will die Erfindung Abhilfe schaffen. Die Erfindung, wie sie in Anspruch 1 gekennzeichnet ist, löst die Aufgabe, die Nachteile der bekannten Einrichtung zu vermeiden und eine kostengünstige Einrichtung zur Zuführung von Kabeln für Kabelbearbeitungsmaschinen zu schaffen.

Vorteilhafte Weiterbildungen der Erfindung sind in den abhängigen Patentansprüchen angegeben.

Zur Kabelbearbeitung transportiert die Kabelbearbeitungsmaschine die zu bearbeitenden Kabel intermittierend und mit hohen Geschwindigkeiten (etwa 5m/s) und hohen Beschleunigungen (etwa 5g). Der schrittweise Kabelbedarf der Kabelbearbeitungsmaschine kann nicht ohne weiteres aus dem Fass oder ab der Rolle gedeckt werden. Dazu ist eine Zuführeinrichtung notwendig, die eine kabelverträgliche Entnahme des Kabels aus dem Fass oder ab der Rolle sicherstellt und die notwendige Kabelmenge der Kabelbearbeitungsmaschine zur Verfügung stellt. Beispielsweise hätte eine ruckartige Kabelentnahme aus dem Fass Kabelschlaufen und/oder Kabelknoten zu Folge. Ein ruckartiger Kabelabzug ab der Rolle hätte bei sehr feinen Kabeln einen Kabelriss zur Folge. Bei Kabeln mit Durchmesser von etwa 0,3 mm und grösser werden üblicherweise steuerbare Rollenspeicher als Puffer zwischen Kabelvorrat und Kabelbearbeitungsmaschine verwendet. Bei sehr feinen Kabeln mit Durchmesser von etwa 0,15 mm sind die durch die Masse der drehenden Rollen und die durch die Masse des bewegbaren Rollengerüstes entstehenden Kabelzugkräfte zu gross. Rollendurchmesser können aber nicht beliebig verkleinert werden, weil für die Kabelendbearbeitung und für die Kabelablage gerade und knickfreie Kabel unabdingbar sind.

Die durch die Erfindung erreichten Vorteile sind im wesentlichen darin zu sehen, dass die erfindungsgemässe Zuführeinrichtung den Bearbeitungsbedingungen der nachgeschalteten Kabelbearbeitungsmaschine mit geringem Aufwand gerecht wird. In der Zuführeinrichtung ist eine Kabelführung mit freiem Durchhang vorgesehen, wobei die durchhängende Kabellänge als Kabelpuffer zwischen Kabelfass bzw. Kabelrolle und der Kabelbearbeitungsmaschine dient. Mit dem freien Kabeldurchhang bleiben auch sehr feine Kabel selbst bei ruckartiger Entnahme knickfrei und gerade. Mit der Steuerung des Kabeldurchhanges kann die den Kabeldurchhang speisende Transporteinheit weitgehend autonom betrieben werden. Die Steuerung des Kabeldurchhanges kann mit einfachen und billigen Mitteln realisiert werden. Falls die durchhängende Kabellänge zu klein oder zu gross ist, kann die Kabelbearbeitungsmaschine die Parameter der Transporteinheit anpassen. Der schrittweise Kabelbedarf der Kabelbearbeitungsmaschine kann mit dem freien Kabeldurchhang gedeckt werden.

Die erfindungsgemässe Kabelzuführung verhindert, dass der Kabeldurchhang sehr feiner Kabel durch statische Aufladung an Maschinenteilen haften bleiben kann.

Weiter vorteilhaft ist die platzsparende Anordnung der erfindungsgemässen Zuführeinrichtung. Die durch die Zuführeinrichtung aufgespannte Ebene steht lotrecht zur Längsachse der Kabelbearbeitungsmaschine. Dadurch wird die gesamte Maschinenlänge nur unwesentlich vergrössert.

Anhand der beiliegenden Figuren wird die vorliegende Erfindung näher erläutert.

Es zeigen:
Fig. 1 eine erfindungsgemässe Einrichtung zur Zuführung von Kabeln,
Fig. 2 Einzelheiten einer Messeinrichtung eines Kabelspeichers,
Fig. 3 die Funktionsweise der Messeinrichtung und
Fig. 4 die für einen Rollenspeicher verwendete Messeinrichtung.

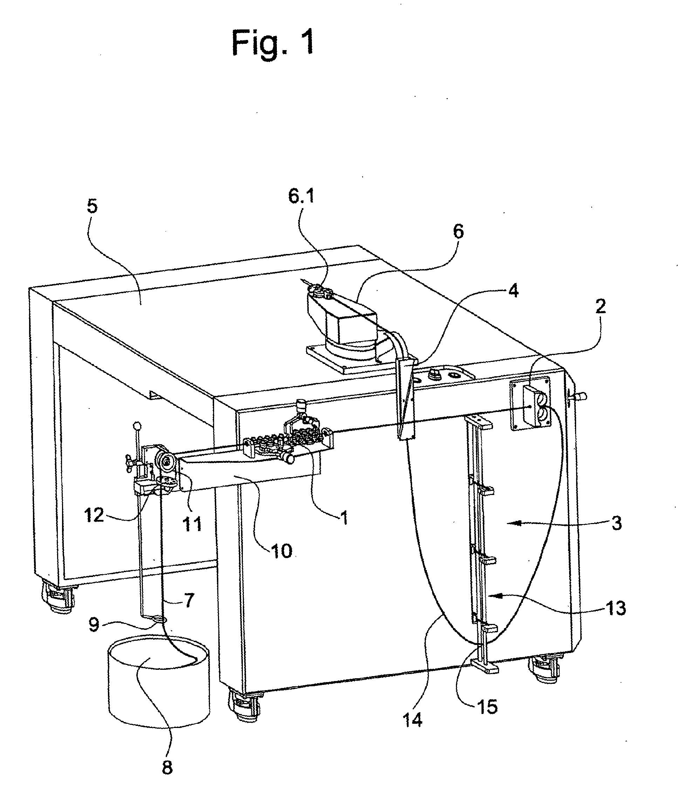

Fig. 1 zeigt eine erfindungsgemässe Einrichtung zur Zuführung von Kabeln, bestehend aus Richteinheit 1, Transporteinheit 2, Kabelspeicher 3 und Kabelführung 4. Die Einrichtung ist an einem Tisch 5 angeordnet, an dem auch eine Schwenkeinheit 6 mit Kabelantrieb 6.1 angeordnet ist. Die Schwenkeinheit 6 bedient nicht dargestellte Kabelbearbeitungsstationen einer Kabelbearbeitungsmaschine. Ein mit 7 bezeichnetes feines bis sehr feines Kabel ist in einem Fass 8 vorrätig gehalten. Der Kabelvorrat kann auch als Kabelrolle vorhanden sein. Das Kabel 7 ist durch eine höhenverstellbare Öse 9 geführt, die beim Kabelauszug Kabelausschwingen verhindert. Eine an einer Konsole 10 der Richteinheit 1 angeordnete Umlenkrolle 11 lenkt das Kabel 7 von der Vertikalen in die Horizontale, wobei vor der Umlenkrolle 11 ein Kabelknotendetektor 12 angeordnet ist. Im weiteren durchläuft das Kabel 7 die Richteinheit 1 die das Kabel richtet, wobei Biegungen und Knicke entfernt werden. Die Transporteinheit 2 zieht das Kabel 7 aus dem Fass 8 und durch die Richteinheit 1 und speist den Kabelspeicher 3. Der Kabelspeicher 3 besteht im wesentlichen aus einer Messeinrichtung 13 zur Überwachung eines Kabeldurchhanges bzw. einer frei durchängenden Kabellänge 14. Der Kabeldurchhang 14 bildet im wesentlichen eine nach oben offene Parabel mit einem Kabelscheitel 15 und ist begrenzt durch die Transporteinheit 2 und durch die Kabelführung 4. In Fig. 1 ist die maximale, frei durchhängende Kabellänge 14 und somit die maximale Kabelspeicherkapazität gezeigt. Je nach Kabelbedarf in der Kabelbearbeitungsmaschine kann der Speicherinhalt abnehmen, der Kabelscheitel 15 wandert dann nach oben. Die Wanderung des Kabelscheitels 15 wird von der Messeinrichtung 13 erfasst und mittels einer nicht dargestellten Steuereinrichtung über die Transporteinheit 2 gesteuert. Der gezeigte Kabelverlauf spannt eine Ebene auf, die lotrecht zur Längsachse der Kabelbearbeitungsmachine steht. Die Kabelführung 4 lenkt das Kabel 7 von dieser Ebene in die Richtung der Längsachse der Kabelbearbeitungsmaschine.

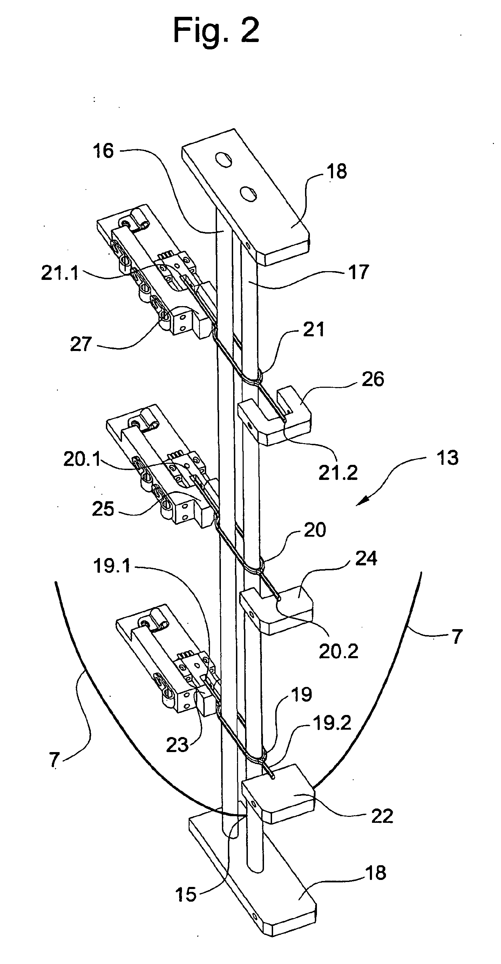

Fig. 2 zeigt Einzelheiten der Messeinrichtung 13 des Kabelspeichers 3. Die Messeinrichtung 13 weist eine erste Säule 16 und eine zweite Säule 17 auf, die je Ende von einer Halterung 18 gehalten werden. Die frei durchhängende Kabellänge 14 verläuft zwischen den Säulen 16,17. Die Säulen 16,17 führen mehrere Läufer. Im gezeigten Beispiel sind ein erster bzw. ein unterster Läufer 19, ein zweiter bzw. ein mittlerer Läufer 20 und ein dritter bzw. ein oberster Läufer 21 vorgesehen. Zwei oder mehr als drei Läufer sind auch möglich. Jeder Läufer weist je Säule einen Ausleger auf. Die Ausleger 19.1,19.2 des ersten Läufers 19 sind kürzer als die Ausleger 20.1,20.2 des zweiten Läufers 20 und die Ausleger 20.1,20.2 des zweiten Läufers 20 sind kürzer als die Ausleger 21.1,21.2 des dritten Läufers 21. Jeder Läufer liegt an einem Auflager und an einer Lichtschranke auf. Der erste Läufer 19 liegt am ersten Auflager 22 und an der ersten Lichtschranke 23 auf. Die erste Lichtschranke 23 detektiert den Ausleger 19.1. Der zweite Läufer 20 liegt am zweiten Auflager 24 und an der zweiten Lichtschranke 25 auf. Die zweite Lichtschranke 25 detektiert den Ausleger 20.1. Der dritte Läufer 21 liegt am dritten Auflager 26 und an der dritten Lichtschranke 27 auf. Die dritte Lichtschranke 27 detektiert den Ausleger 21.1. Die Länge der Ausleger ist so vorgesehen, dass der jeweilige Läufer an den oberen Auslegern bzw. an den oberen Lichtschranken vorbeibewegt werden kann. Der erste Läufer 19 (erste Ebene gebildet durch Auflager 22 und Lichtschranke 23) kann durch die zweite und dritte Ebene bewegt werden. Der zweite Läufer 20 (zweite Ebene gebildet durch Auflager 24 und Lichtschranke 25) kann durch die dritte Ebene (gebildet durch Auflager 26 und Lichtschranke 27) bewegt werden. Auf und ab bewegt werden die Läufer 19,20,21 durch den wandernden Kabelscheitel 15. Bei sehr feinen Kabeln 7 wiegen die Läufer 19,20,21 gesamthaft etwa 10 g. Die Läufer 19,20,21 verhindern auch, dass das Kabel 7 an den Säulen 16,17 oder an Teilen des Tisches 5 elektrostatisch haften bleibt.

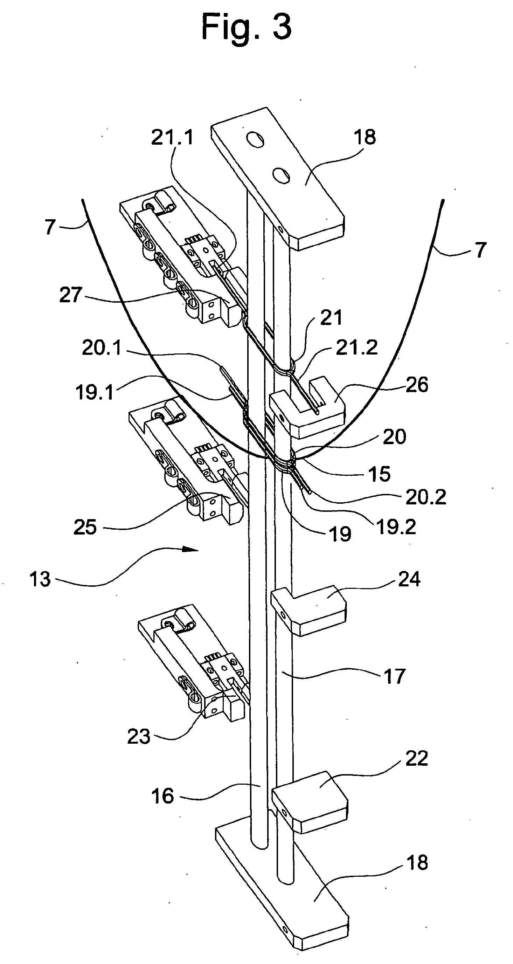

Die Signale der Lichtschranken 23,25,27 werden der nicht dargestellten Steuereinrichtung zugeführt, die die Transporteinheit 2 steuert. In der in Fig. 2 gezeigten Lage des Kabelscheitels 15 ist die Transporteinheit 2 nicht aktiviert, bzw. die Transporteinheit 2 speist den Kabelspeicher 3 nicht. Hat nun die Kabelbearbeitungsmaschine Bedarf an Kabel 7, so wandert der Kabelscheitel 15 nach oben, wobei der erste Läufer 19 aus der ersten Lichtschranke 23 gehoben wird. Mit dem Signal der ersten Lichtschranke 23 wird die Transporteinheit 2 auf Stufe 1 geschaltet (beispielsweise 80% einer mittleren Kabeltransportgeschwindigkeit). Genügt das dabei in den Kabelspeicher 3 eingespeiste Kabel 7 nicht dem Bedarf der Kabelbearbeitungsmaschine, so wandert der Kabelscheitel 15 weiter nach oben und hebt den zweiten Läufer 20 wie in Fig. 3 gezeigt aus der zweiten Lichtschranke 25. Mit dem Signal der zweiten Lichtschranke 25 wird die Transporteinheit 2 auf Stufe 2 geschaltet (beispielsweise 120% einer mittleren Kabeltransportgeschwindigkeit). Genügt das dabei in den Kabelspeicher 3 eingespeiste Kabel 7 nicht dem Kabelbedarf der Kabelbearbeitungsmaschine, so wandert der Kabelscheitel 15 weiter nach oben und hebt den dritten Läufer 21 aus der dritten Lichtschranke 27. Mit dem Signal der dritten Lichtschranke 27 wird die Transporteinheit 2 und die Kabelbearbeitungsmaschine ausgeschaltet.

Ist beispielsweise die Transporteinheit 2 auf Stufe 2 geschaltet und wird dem Kabelspeicher 3 mehr Kabel 7 zugeführt als die Kabelbearbeitungsmaschine an Kabelbedarf hat, so senkt sich der Kabelscheitel 15 und deponiert den zweiten Läufer 20 in der zweiten Lichtschranke 25. Mit dem Signal der zweiten Lichtschranke 25 wird die Transporteinheit 2 auf Stufe 1 geschaltet. Sinngemässes gilt für den ersten Läufer 19 und die erste Lichtschranke 23.

Die einzelnen Geschwindigkeitsstufen der Transporteinheit 2 können auch von der Steuerung der Kabelbearbeitungsmaschine beeinflusst werden. Je nach Bearbeitungsprogramm der Kabelbearbeitungsmaschine kann in der jeweiligen Stufe die Kabelgeschwindigkeit der Transporteinheit 2 angepasst werden.

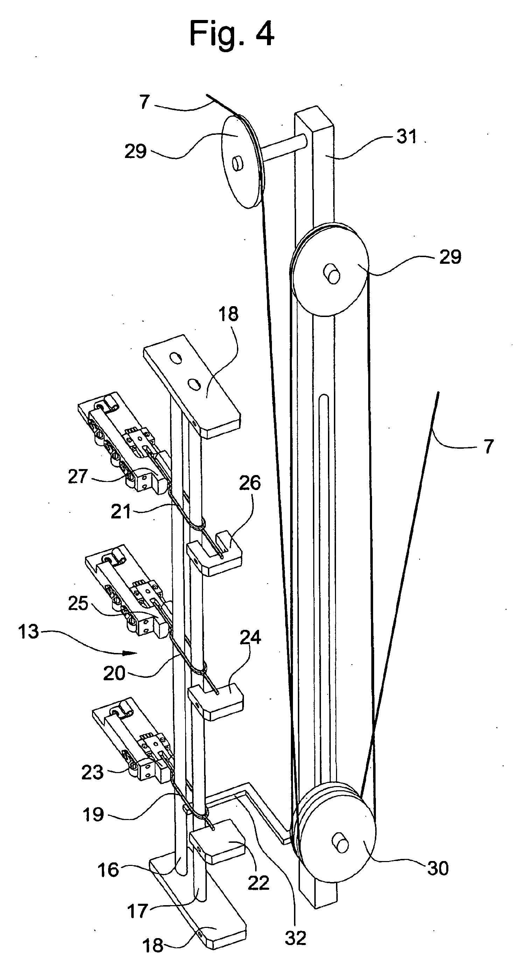

Fig. 4 zeigt einen auf dem Prinzip des Flaschenzuges beruhenden, mittels Rollen 29,30 realisierten Kabelspeicher 3, wobei die Messeinrichtung 13 zur Erfassung der Lage der mobilen, mindestens eine Kabelebene aufweisenden Rolle 30 verwendet wird. Die Rollen 29,30 mit mindestens einer Kabelebene sind an einem Ständer 31 angeordnet, wobei die mobile Rolle 30 entlang des Ständers 31 bewegbar ist. Der Speicherinhalt richtet sich nach der Lage der mobilen Rolle 30. Ein an der mobilen Rolle 30 angeordneter Finger 32 bedient die Läufer 19,20,21. Die Funktionsweise der Messeinrichtung 13 und der Transporteinheit 2 ist sinngemäss wie oben erläutert.

## Patentansprüche

1. Kabelzuführeinrichtung für eine Kabelbearbeitungsmaschine, wobei die Kabelzuführeinrichtung aus einem Kabelvorrat (8), einem nach dem Kabelvorrat (8) und vor der Kabelbearbeitungsmaschine vorgesehenen Kabelspeicher (3) und einer Transporteinheit (2) besteht, wobei der Kabelspeicher (3) mittels der Transporteinheit (2) speisbar ist und der Kabelspeicher (3) den Kabelbedarf der Kabelbearbeitungsmaschine deckt,
**dadurch gekennzeichnet,**
**dass** der Kabelspeicher (3) zur Erfassung des Speicherinhaltes mehrere übereinander angeordnete, an Säulen (16,17) geführte Läufer (19,20,21) aufweist, die mittels des wandernden Kabelscheitels (15) oder einer mobilen Rolle (30), über die das Kabel im Kabelspeicher (3) geführt ist, auf und ab bewegbar sind, wobei jeder Läufer (19,20,21) je Säule (16,17) einen Ausleger (19.1,19.2,20.1,20.2,21.1,21.2) aufweist und die Länge der Ausleger von Läufer zu Läufer variiert und entsprechend der Länge der Ausleger Auflager (22,23,24,25,26) vorgesehen sind, an denen der Läufer mit der entsprechenden Auslegerlänge auflegbar ist und je Läufer ein Sensor (23,25,27) vorgesehen ist, der den aufgelegten Läufer detektiert und die Transporteinheit (2) mittels der Sensorsignale steuerbar ist.

2. Kabelzuführeinrichtung nach Anspruch 1,
**dadurch gekennzeichnet,**
**dass** der Sensor eine Lichtschranke (23,25,27) ist, die mittels des auflegbaren Auslegers (19.1,20.1,21.1) betätigbar ist.

3. Kabelzuführeinrichtung nach einem der Ansprüche 1 oder 2,
**dadurch gekennzeichnet,**
**dass** das Kabel (7) im Kabelspeicher (3) einen freien zwischen den Säulen (16,17) verlaufenden Kabeldurchhang (14) mit dem Kabelscheitel (15) bildet, wobei der Kabelscheitel (15) die Läufer (19,20,21) bewegt.

4. Kabelzuführeinrichtung nach einem der Ansprüche 1 oder 2,
**dadurch gekennzeichnet,**
**dass** das Kabel (7) im Kabelspeicher (3) über mindestens eine feste Rolle (29) und über mindestens eine mobile Rolle (30) geführt ist, wobei ein an der mobilen Rolle (30) angeordneter Finger (32) die Läufer (19,20,21) bewegt.

## Claims

1. Cable feeding apparatus for a cable processing machine, the cable feeding apparatus consisting of a cable stock (8), a cable buffer (3) that is provided before the cable processing machine, and a transporting unit (2), the cable buffer (3) being feedable by means of the transporting unit (2), and the cable buffer (3) catering for the cable requirement of the cable processing machine,
**characterized in that**
to detect the buffer content the cable buffer (3) has several runners (19, 20, 21) that are arranged one above the other and guided on columns (16, 17) and are movable up and down by means of the moving cable apex (15) or a mobile pulley (30) over which the cable is guided in the cable buffer (3),
each runner (19, 20, 21) having per column (16, 17) an arm (19.1, 19.2, 20.1, 20.2, 21.1, 21.2), and the length of the arms varying from runner to runner, and there being provided corresponding to the length of the arms supports (22, 23, 24, 25, 26) on which the runner with the corresponding arm length can be laid, and there being provided per runner a sensor (23, 25, 27) that detects the laid-on runner, and **in that** the transporting unit (2) is controllable by means of the sensor signals.

2. Cable feeding apparatus according to Claim 3,
**characterized in that**
the sensor is a light barrier (23, 25, 27) which can be actuated by means of the arm (19.1, 20.1, 21.1) that can be laid on it.

3. Cable feeding apparatus according to one of claims 1 or 2,
**characterized in that**
the cable (7) in the cable buffer (3) forms a free-hanging cable loop (14) with the cable apex (15), the cable apex (15) moving the runners (19, 20, 21).

4. Cable feeding apparatus according to one of claims 1 or 2,
**characterized in that**
the cable (7) in the cable buffer (3) is guided over at least one fixed pulley (29) and over at least one mobile pulley (30), a finger (32) arranged on the mobile pulley (30) moving the runners (19, 20, 21).

## Revendications

1. Dispositif d'amenée de câble pour une machine de traitement de câbles, composé d'un stock de câble (8), d'une réserve de câble (3) prévue après celui-ci et avant la machine de traitement de câbles, et d'une unité de transport (2), la réserve de câble (3) étant apte à être alimentée grâce à l'unité de transport (2) et couvrant le besoin en câble de ladite machine,
**caractérisé en ce que** la réserve de câble (3), pour enregistrer son contenu, comporte plusieurs curseurs (19, 20, 21) qui sont disposés les uns au-dessus des autres, qui sont guidés sur des colonnes (16, 17) et qui sont aptes à monter et descendre grâce au sommet de câble mobile (15) ou à une poulie mobile (30) sur laquelle passe le câble dans la réserve de câble (3), étant précisé que chaque curseur (19, 20, 21) présente sur chaque colonne (16, 17) un bras (19.1, 19.2, 20.1, 20.2, 21.1, 21.2), que la longueur de ces bras varie d'un curseur à l'autre, que suivant la longueur des bras, il est prévu des appuis (22, 23, 24, 25, 26) sur lesquels le curseur peut être posé avec la longueur de bras correspondante, qu'il est prévu pour chaque curseur un capteur (23, 25, 27) qui détecte le curseur posé, et que l'unité de transport (2) est apte à être commandée à l'aide des signaux de capteur.

2. Dispositif d'amenée de câble selon la revendication 1, **caractérisé en ce que** le capteur est constitué par une cellule photoélectrique (23, 25, 27) qui est apte à être actionnée à l'aide du bras apte à être posé (19.1, 20.1, 21.1).

3. Dispositif d'amenée de câble selon la revendication 1 ou 2, **caractérisé en ce que** le câble (7) forme dans la réserve de câble (3) une flèche de câble libre (14) qui passe entre les colonnes (16, 17) et qui présente le sommet de câble (15), le sommet (15) déplaçant les curseurs (19, 20, 21).

4. Dispositif d'amenée de câble selon la revendication 1 ou 2, **caractérisé en ce que** le câble (7), dans la réserve de câble (3), passe sur au moins une poulie fixe (29) et au moins une poulie mobile (30), une queue (32) disposée sur la poulie mobile (30) déplaçant les curseurs (19, 20, 21).
